# FASCICULE DE BREVET EUROPEEN

(11) **EP 2 145 117 B1**
(45) Date de publication et mention de la délivrance du brevet: **01.09.2010**
(21) Numéro de dépôt: 08787982.1
(22) Date de dépôt: 22.04.2008
(51) Int. Cl.: F16B 45/02

(54) **MOUSQUETON A DOIGT MOBILE EN FORME DE FIL**
FEDERHAKEN MIT BEWEGLICHER NADEL IN DRAHTFORM
SPRING HOOK WITH MOVING PAWL IN WIRE FORM

(30) Priorité: 03.05.2007 FR 0703188
(43) Date de publication de la demande: 20.01.2010
(73) Titulaire: Zedel, 38920 Crolles (FR)
(72) Inventeur: PETZEL, Paul, F-38530 Barraux (FR); PLAZE, Pierre, F-73000 Chambery (FR); MAURICE, Alain, F-38660 Saint Hilaire Du Touvet (FR)
(74) Mandataire: Hecké, Gérard
(86) Numéro de dépôt international: PCT/FR2008/000565
(87) Numéro de publication internationale: WO 2008/148950

(56) Documents cités:
- DE-A1- 19 539 587
- GB-A- 304 966
- GB-A- 2 192 926
- US-A- 403 038

## Description

### Domaine technique de l'invention

L'invention est relative à un mousqueton, comprenant :
- un corps métallique en forme d'anneau ouvert ayant une première extrémité dotée d'un élément de retenue,
- un doigt mobile autour d'un axe entre une position de fermeture et une position d'ouverture vers l'intérieur, ledit axe étant situé au voisinage de la deuxième extrémité du corps,
- et un dispositif de rappel élastique sollicitant le doigt vers la position de fermeture.

### État de la technique

Le document EP 606808 décrit un mousqueton dans lequel le doigt pivotant vers l'intérieur du corps est formé par un barreau en alliage d'aluminium ayant sensiblement le même diamètre que le corps. Le rappel du doigt vers la position de fermeture intervient au moyen d'un ressort agissant directement sur l'extrémité du doigt. Le ressort peut être un ressort de torsion ou un ressort à lame. La présence d'un barreau de diamètre similaire au corps du mousqueton limite néanmoins la zone d'ouverture, étant donné que l'extrémité du doigt vient rapidement en butée.

Il existe également des mousquetons dans lesquels le barreau du doigt mobile est remplacé par un fil d'acier conformé en épingle. Le fil est déformable élastiquement, et plié selon une boucle ouverte. Les extrémités sont recourbées en équerre sans être coaxiales, et sont introduites dans des orifices décalés du corps fixe. L'épingle pivote sur le corps autour de ces extrémités recourbées, et se déforme lors du mouvement de pivotement d'ouverture. Le doigt est ensuite ramené automatiquement par rappel élastique vers la position de fermeture. Ce type de mousqueton présente une zone d'ouverture plus importante, mais a l'inconvénient de présenter un crochet au bout du corps en C.

### Objet de l'invention

L'objet de l'invention consiste à réaliser un mousqueton ayant un doigt en fil d'acier facile à manipuler dans toutes les conditions, peu onéreux à fabriquer, et avec une résistance en traction répondant aux normes de sécurité.

Le mousqueton selon l'invention est caractérisé en ce que le doigt est formé par un fil rigide métallique de diamètre inférieur à celui du corps, ledit fil comportant une protubérance à l'une des extrémités pour constituer l'élément d'accrochage mâle, et une boucle d'articulation à l'extrémité opposée pour le passage de l'axe.

La boucle d'articulation tourne autour de l'axe fixe lors de la fermeture ou de l'ouverture du doigt, et la protubérance à l'extrémité opposée est bloquée par l'élément de retenue femelle du corps dans la position de fermeture. Le fil est monobranche, et facile à manipuler lors de l'ouverture.

Selon un mode de réalisation préférentiel, la boucle d'articulation comporte un contour fermé réalisé par enroulement de l'extrémité du fil métallique. Le dispositif de rappel élastique du doigt comporte un ressort de compression coopérant avec un étrier de transfert intermédiaire à l'intérieur d'un logement de la deuxième extrémité du corps. La boucle d'articulation du doigt comprend deux méplats de guidage sur les faces opposées, et un renflement dans une zone non aplatie servant d'organe de blocage coopérant avec une zone de butée du corps. L'élément de retenue femelle à l'extrémité supérieure du corps comprend un évidement ayant un profil de forme conjuguée à l'élément d'accrochage mâle.

La combinaison du système d'accrochage amont du doigt avec le système de blocage aval permet d'améliorer la résistance à la traction du mousqueton.

L'étrier de transfert comporte un pion de centrage destiné à être introduit dans le ressort de compression, et deux branches de transmission en contact avec la boucle d'articulation pour transmettre un mouvement d'armement au ressort lors de l'ouverture du doigt, et un mouvement opposé de fermeture du doigt par rotation de la boucle sur l'axe fixe lors de la détente du ressort.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- les figures 1 et 2 sont des vues en perspective de profil avec des orientations différentes du mousqueton selon l'invention, représenté en position de fermeture du doigt mobile ;
- la figure 3 montre une vue de détail de la figure 1, illustrant le montage de la boucle d'articulation du fil dans la deuxième extrémité inférieure du corps ;
- la figure 4 montre une vue de détail de la figure 2, illustrant le blocage de la protubérance terminale du fil dans l'élément de retenue femelle du corps ;

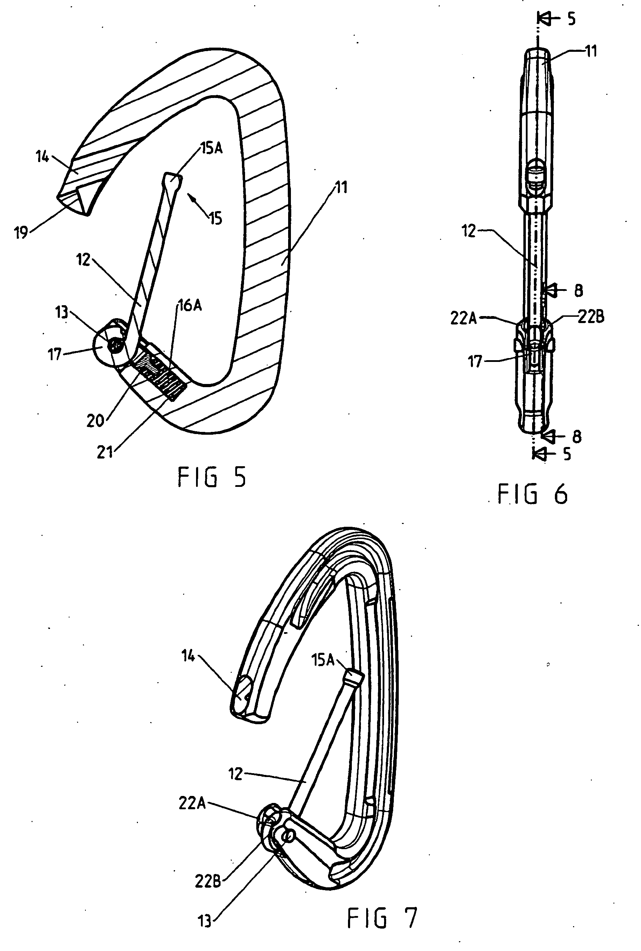

- la figure 5 représente une vue en coupe du mousqueton selon la ligne 5-5 de la figure 6, le doigt étant en cours d'ouverture ;
- la figure 6 est une vue de face du mousqueton ;
- la figure 7 est une vue en perspective de profil du mousqueton avec le doigt en fin de course d'ouverture ;
- les figures 8 à 10 sont des vues de détail en coupe du dispositif de rappel élastique, respectivement en positions de fermeture, d'ouverture partielle, et de fin de course d'ouverture du doigt ;
- la figure 11 est une vue en perspective éclatée du mousqueton selon l'invention ;
- les figures 12 et 13 sont des vues de face et de profil du doigt mobile ;
- les figures 14 et 15 sont des vues de face et de profil de l'étrier de transfert ;
- la figure 16 est une variante de la figure 11;
- la figure 17 représente une vue en perspective partiellement arrachée du montage de l'axe dans la boucle d'articulation du mousqueton selon la figure 16 ;
- les figures 18 et 19 illustrent des vues en coupe du mousqueton de la figure 16, respectivement en positions de fermeture et d'ouverture du doigt pivotant.

### Description détaillée de l'invention

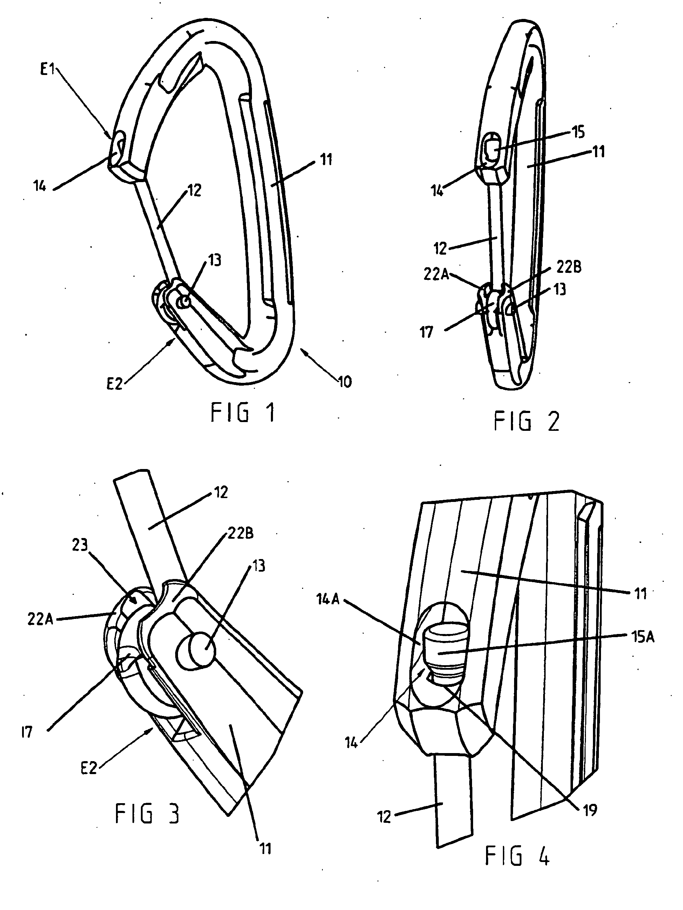

En référence aux figures 1 à 4 et 11, un mousqueton 10 pour l'escalade comporte un corps 11 métallique en forme de C, et un doigt 12 mobile monté à pivotement limité autour d'un axe 13 situé à l'extrémité inférieure du corps 11. La première extrémité E1 supérieure du corps 11 est pourvue d'un élément de retenue 14 femelle dans lequel s'engage un élément d'accrochage 15 mâle du doigt 12 lors de son retour vers la position de fermeture sous l'action d'un dispositif de rappel 16 élastique. Le corps 11 est réalisé de préférence en alliage d'aluminium forgé.

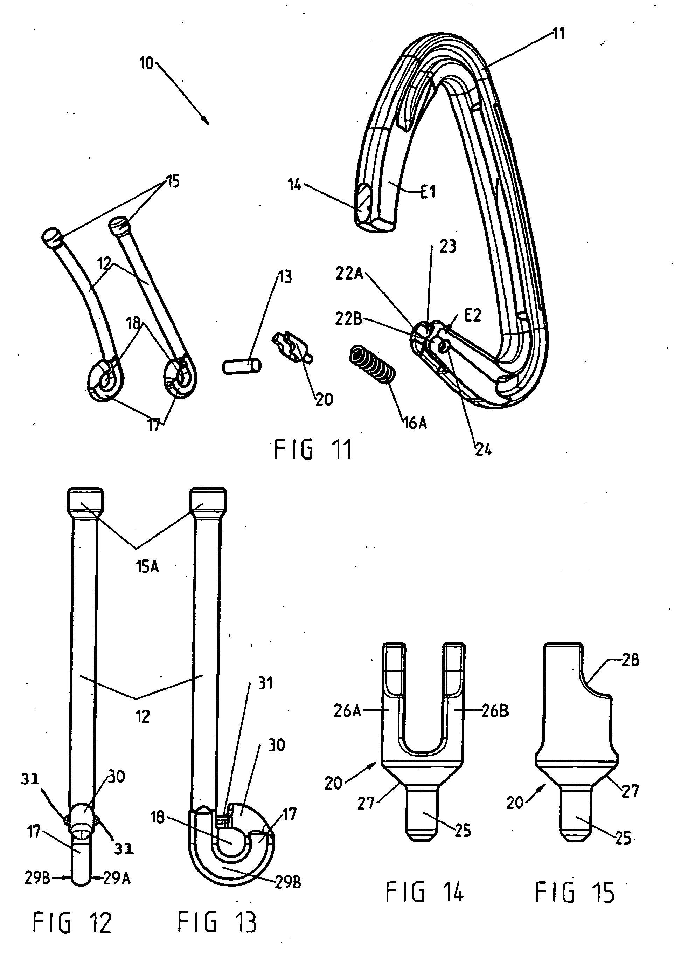

Sur les figures 12 et 13, le doigt 12 est formé par un fil ou tige en acier ayant un diamètre très inférieur à celui du corps 11. Le fil rigide du doigt 12 se termine à l'extrémité supérieure par une protubérance 15A en forme de chape pour constituer l'élément d'accrochage 15 mâle. L'extrémité inférieure du fil d'acier est enroulée selon une boucle 17 d'articulation, ayant un contour fermé délimitant un orifice 18 interne circulaire traversé par l'axe 13 fixe et serti.

Le fil du doigt 12 peut être rectiligne ou coudé (voir respectivement fil de droite et fil de gauche sur la figure 11).

L'élément de retenue 14 femelle à l'extrémité supérieure E1 du corps 11 comprend un évidement 14A (voir figure 4) dont le profil interne possède une forme conjuguée à l'élément d'accrochage 15 mâle. En position de fermeture du doigt 12, le fil vient buter contre un arrêt 19 ménagé à l'intérieur de l'évidement 14A, et la protubérance 15A de l'élément d'accrochage 15 mâle reste emprisonnée dans l'évidement 14A sans faire saille du corps 11. La section de la première extrémité E1 supérieure reste sensiblement constante par rapport au reste du corps 11 sans former de renflement.

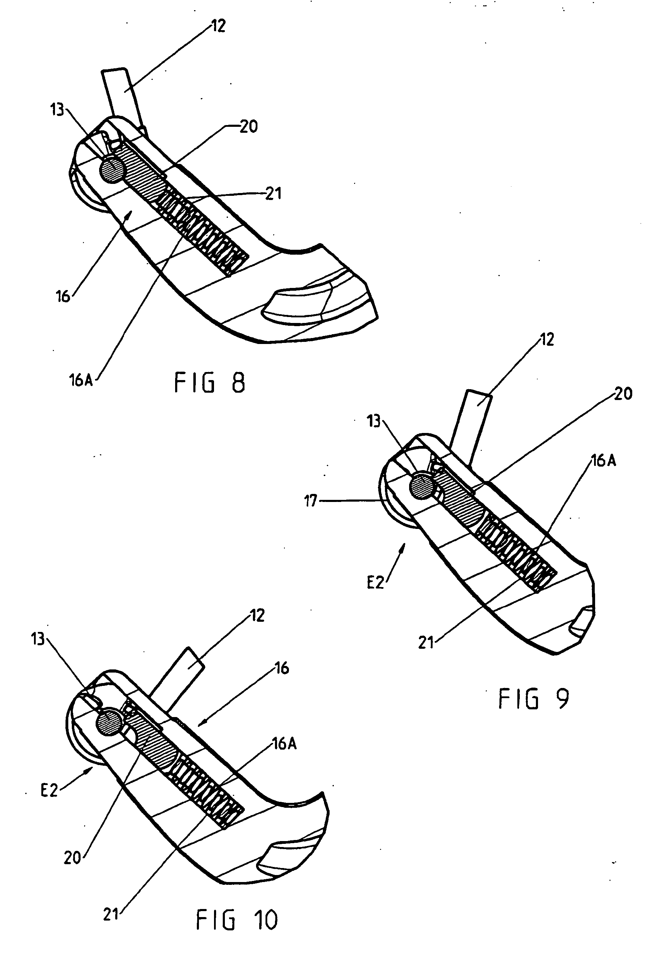

Sur les figures 8 à 10, le dispositif de rappel 16 élastique du doigt 12 comporte un ressort 16A de compression coopérant avec un étrier de transfert 20 intermédiaire. L'ensemble est agencé dans un logement 21 ménagé dans la deuxième extrémité E2 inférieure du corps 11, l'étrier de transfert 20 étant inséré entre la boucle 17 d'articulation et le ressort 16A pour transmettre l'effort de fermeture au doigt 12.

La deuxième extrémité E2 inférieure du corps 11 est dotée de deux ailes 22A, 22B (figures 2 ,3 et 11) opposées légèrement convexes et séparées l'une de l'autre par un intervalle 23 central de réception de la boucle 17 d'articulation du doigt 12. Les deux ailes 22A, 22B sont munies de deux trous 24 alignés dans la direction transversale avec l'orifice 18 de la boucle 17 pour le passage de l'axe 13 d'articulation. Le logement 21 débouche dans l'intervalle 23 pour autoriser le coulissement bidirectionnel de l'étrier de transfert 20 lors de la compression et de la détente du ressort 16A.

Sur les figures 14 et 15, l'étrier de transfert 20 comporte une partie centrale 27 tronconique équipée d'un pion 25 de centrage destiné à être introduit dans le ressort 16A de compression, et de deux branches de transmission 26A, 26B parallèles en forme de fourche en U. Chaque branche 26A, 26B est pourvue d'une portion découpée 28 de forme arrondie prenant appui sur l'axe 13.

En référence aux figures 12 et 13, la boucle 17 d'articulation du doigt 12 comprend deux méplats de guidage 29A, 29B sur les faces opposées, et une zone non aplatie ou renflement 30 servant d'organe de blocage coopérant avec une zone de butée du corps 11 pour éviter tout effet de dépliage du fil enroulé de la boucle 17. L'extrémité non découpée des branches 26A, 26B de transmission de l'étrier de transfert 20 est en appui sur une paire d'ergots 31 au bout de la boucle 17, de manière à transmettre un mouvement d'armement au ressort 16A lors de l'ouverture du doigt 12, et pour dériver de la détente du ressort 16A un mouvement opposé de fermeture du doigt 12 par rotation de la boucle 17 sur l'axe 13 fixe.

Le fil d'acier du doigt 12 et sa protubérance 15A en guise de tête, ressemble à un clou dont la pointe a été remplacée par la boucle 17 d'articulation. Les éléments de retenue 14 et d'accrochage 15, ainsi que le dispositif de rappel 16 élastique sont intégrés dans le corps 11 du mousqueton 10 sans nécessiter d'augmentation de sa section.

Le montage du mousqueton 10 selon l'invention s'effectue de la manière suivante : On introduit d'abord le ressort 16A dans le logement 21 de la deuxième extrémité inférieure E2 du corps 11, puis l'étrier de transfert 20 par engagement du pion 25 dans le ressort 16A hélicoïdal. On positionne ensuite la boucle 17 d'articulation du doigt 12 dans l'intervalle 23 entre les deux branches de transmission 26A, 26B de l'étrier de transfert 20 de manière à aligner l'orifice 18 de la boucle 17 avec les deux trous 24 des ailes 22A, 228. L'axe 13 peut alors être introduit dans l'orifice 18 pour être bloqué par boutrolage.

L'axe 13 est fixe, et la boucle d'articulation 17 tourne autour de l'axe 13 lors de la fermeture ou de l'ouverture du mousqueton 10. La présence des méplats 29A, 29B de guidage permet d'obtenir une bonne articulation lors de la rotation du doigt 12. Le renflement 30 de la zone non aplatie coopère avec une zone de butée du corps 11 pour éviter tout effet de dépliage du fil enroulé de la boucle 17. La combinaison du système d'accrochage amont du doigt avec le système de blocage aval permet d'améliorer la résistance à la traction du mousqueton 10.

Le fil métallique du doigt mobile 12 est de préférence en acier inoxydable, ou acier traité, mais tout autre métal peut être utilisé.

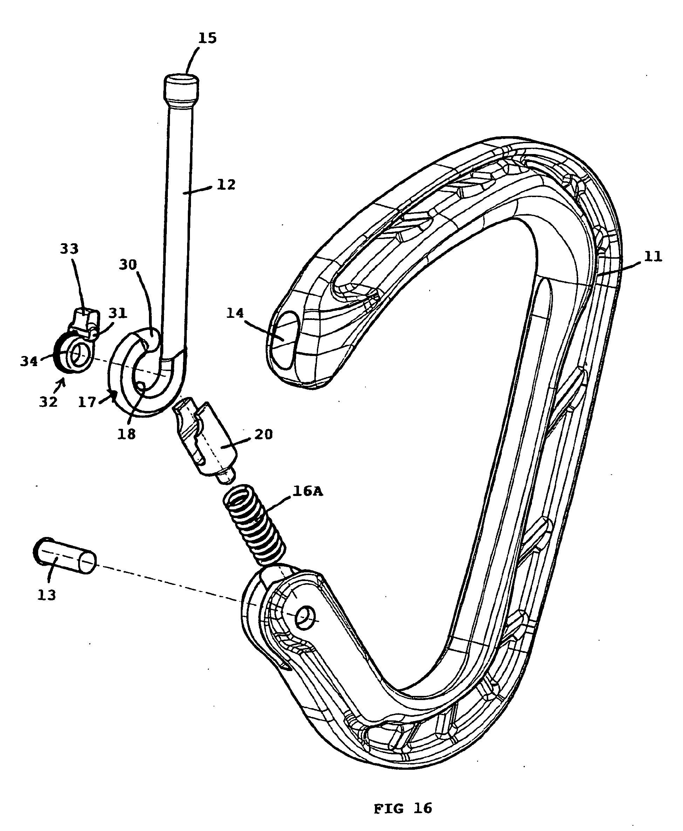

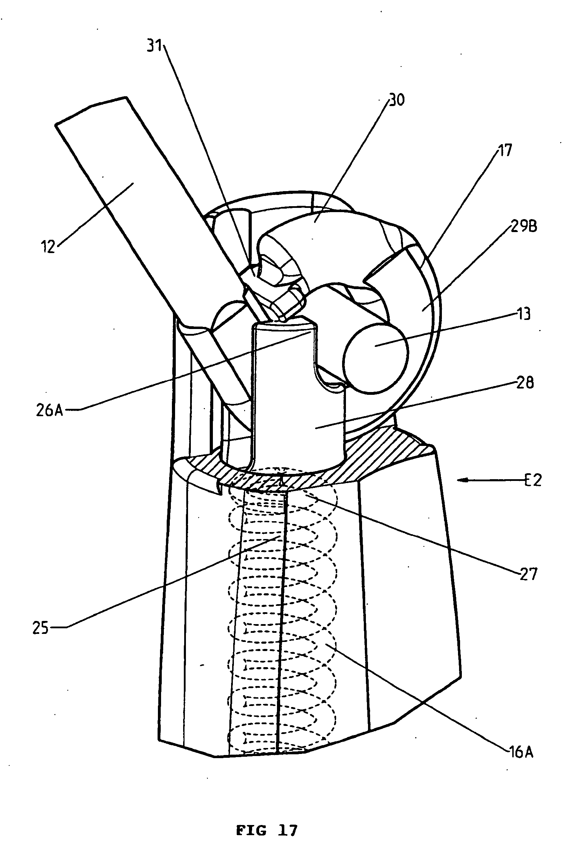

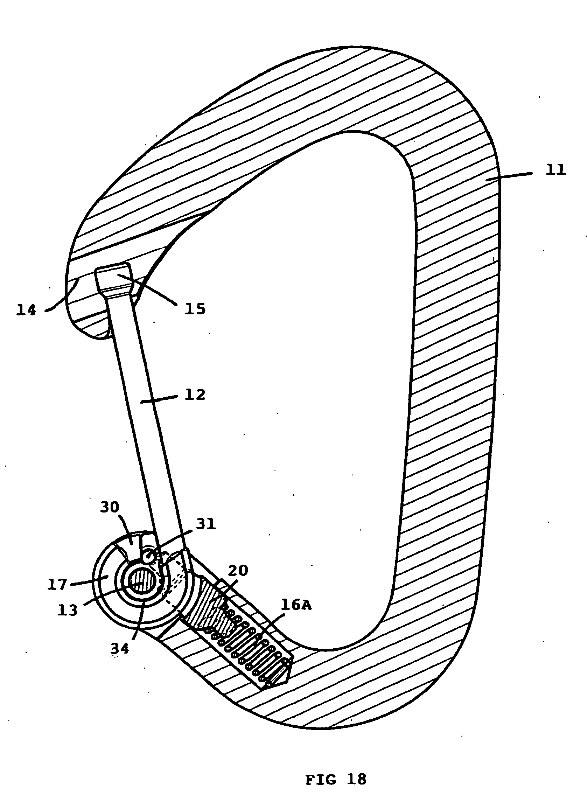

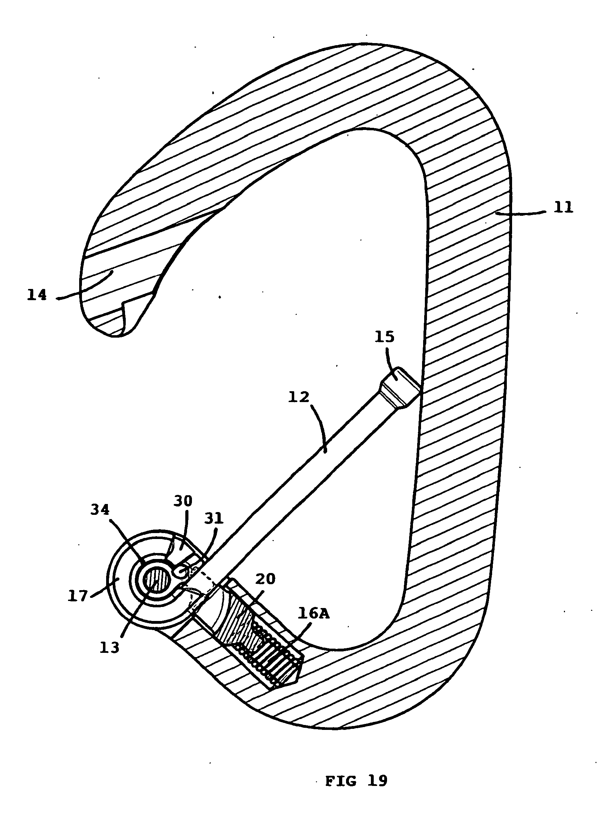

Dans la variante de réalisation selon les figures 16 à 19, la boucle 17 du doigt 12 s'arrête au niveau du renflement 30. La paire d'ergots 31 n'est plus solidaire du bout de la boucle 17 d'articulation, mais est portée par une pièce de support 32 ayant une première extrémité 33 en appui contre le renflement 30, et comportant une embase 34 tubulaire à la deuxième extrémité opposée. L'embase 34 est logée coaxialement dans l'orifice 18 circulaire de la boucle 17, et sert traversée par l'axe 13 en servant avantageusement de palier.

## Revendications

1. Mousqueton (10) comprenant:
- un corps (11) métallique en forme d'anneau ouvert ayant une première extrémité (E1) dotée d'un élément de retenue (14),
- un doigt (12) mobile autour d'un axe (13) entre une position de fermeture et une position d'ouverture, ledit axe étant situé au voisinage de la deuxième extrémité (E2) du corps (11),
- un dispositif de rappel (16) élastique sollicitant le doigt (12) vers la position de fermeture,
**caractérisé en ce que** le doigt (12) est formé par un fil rigide métallique de diamètre inférieur à celui du corps (11), ledit fil comportant une protubérance (15A) à l'une des extrémités pour constituer un élément d'accrochage (15) mâle, et une boucle (17) d'articulation à l'extrémité opposée pour le passage de l'axe (13).

2. Mousqueton selon la revendication 1, **caractérisé en ce que** la boucle (17) d'articulation comporte un contour fermé réalisé par enroulement de l'extrémité du fil métallique.

3. Mousqueton selon la revendication 2, **caractérisé en ce que** la boucle (17) d'articulation du doigt (12) comprend deux méplats de guidage (29A, 29B) sur les faces opposées, et un renflement (30) dans une zone non aplatie servant d'organe de blocage coopérant avec une zone de butée du corps (11).

4. Mousqueton selon la revendication 1, **caractérisé en ce que** le dispositif de rappel (16) élastique du doigt (12) comporte un ressort (16A) de compression coopérant avec un étrier de transfert (20) intermédiaire dans un logement (21) de la deuxième extrémité (E2) du corps (11).

5. Mousqueton selon la revendication 4, **caractérisé en ce que** l'étrier de transfert (20) comporte un pion (25) de centrage destiné à être introduit dans le ressort (16A) de compression, et deux branches de transmission (26A, 26B) en contact avec la boucle (17) pour transmettre un mouvement d'armement au ressort (16A) lors de l'ouverture du doigt (12), et un mouvement opposé de fermeture du doigt (12) par rotation de la boucle (17) sur l'axe (13) fixe lors de la détente du ressort (16A).

6. Mousqueton selon la revendication 1, **caractérisé en ce que** la deuxième extrémité (E2) inférieure du corps (11) est dotée de deux ailes (22A, 22B) opposées légèrement convexes et séparées l'une de l'autre par un intervalle (23) central de réception de la boucle (17) d'articulation du doigt (12), les deux ailes 22A, 22B étant munies de deux trous (24) alignés dans la direction transversale avec l'orifice (18) de la boucle (17) pour le passage de l'axe (13).

7. Mousqueton selon la revendication 2, **caractérisé en ce que** le corps (11) est réalisé en alliage d'aluminium forgé, et comporte à l'extrémité supérieure (E1) un élément de retenue (14) femelle muni d'un évidement (14A) ayant un profil de forme conjuguée à l'élément d'accrochage (15) mâle, et que le fil du doigt mobile (12) est en acier présentant une forme rectiligne ou coudée.

8. Mousqueton selon la revendication 5, **caractérisé en ce que** les branches de transmission (26A, 26B) de l'étrier de transfert (20) coopèrent avec une paire d'ergots (31) pour transmettre lesdits mouvements d'armement et de fermeture.

9. Mousqueton selon la revendication 8, **caractérisé en ce que** la paire d'ergots (31) est solidaire du doigt (12) en étant agencée dans le prolongement du renflement (30) de la boucle (17).

10. Mousqueton selon la revendication 8, **caractérisé en ce que** la paire d'ergots (31) est portée par une pièce de support (32) ayant une première extrémité (33) en appui contre le renflement (30), et comportant une embase (34) tubulaire à la deuxième extrémité opposée, ladite embase (34) étant logée coaxialement dans l'orifice (18) circulaire de la boucle (17) pour servir de palier à l'axe (13).

## Claims

1. A carabiner (10) comprising:
- a metal body (11) in the form of an open ring having a first end (E1) equipped with a securing part (14),
- a gate (12) moving around a swivel-pin (13) between a closed position and an open position, said swivel-pin being situated in proximity to the second end (E2) of the body (11),
- a flexible return device (16) biasing the gate (12) to the closed position,
**characterized in that** the gate (12) is formed by a rigid metal wire having a smaller diameter than that of the body (11), said wire comprising a protuberance (15A) at one of the ends thereof to constitute a male latching element (15), and an articulation loop (17) at the opposite end for passage of the swivel-pin (13).

2. The carabiner according to claim 1, **characterized in that** the articulation loop (17) comprises a closed contour achieved by winding the end of the metal wire.

3. The carabiner according to claim 2, **characterized in that** the articulation loop (17) of the gate (12) comprises two guiding flats (29A, 29B) on the opposite surfaces and a bulge (30) in a non-flattened zone acting as blocking part operating in conjunction with a stop zone of the body (11).

4. The carabiner according to claim 1, **characterized in that** the flexible return device (16) of the gate (12) comprises a compression spring (16A) operating in conjunction with an intermediate transfer stirrup (20) in a housing (21) of the second end (E2) of the body (11).

5. The carabiner according to claim 4, **characterized in that** the transfer stirrup (20) comprises a centring pin (25) designed to be inserted in the compression spring (16A), and two transmission branches (26A, 26B) in contact with the loop (17) to transmit a loading movement to the spring (16A) when the gate (12) is opened, and to transmit an opposite closing movement of the gate (12) by rotation of the loop (17) on the fixed swivel-pin (13) when expansion of the spring (16A) takes place.

6. The carabiner according to claim 1, **characterized in that** the bottom second end (E2) of the body (11) is provided with two slightly convex opposite wings (22A, 22B) separated from one another by a central gap (23) accommodating the articulation loop (17) of the gate (12), the two wings (22A, 22B) being provided with two holes (24) aligned in the transverse direction with the hole (18) of the loop (17) for passage of the swivel-pin (13).

7. The carabiner according to claim 2, **characterized in that** the body (11) is made of forged aluminium alloy and, at the top end (E1) thereof, comprises a female securing element (14) provided with a recess (14A) having a profile of conjugate shape to the male latching element (15), and that the wire of moving gate (12) is made from steel presenting a straight or curved shape.

8. The carabiner according to claim 5, **characterized in that** the transmission branches (26A, 26B) of the transfer stirrup (20) operate in conjunction with a pair of spigots (31) to transmit said loading and closing movements.

9. The carabiner according to claim 8, **characterized in that** the pair of spigots (31) are securedly affixed to the gate (12) and are arranged in the continuation of the bulge (30) of the loop (17).

10. The carabiner according to claim 8, **characterized in that** the pair of spigots (31) are supported by a support part (32) having a first end (33) pressing against the bulge (30) and comprising a tubular base-part (34) at the opposite second end, said base-part (34) being housed coaxially in the circular hole (18) of the loop (17) to act as bearing for the swivel-pin (13).

## Patentansprüche

1. Karabiner (10), der umfasst:
- einen metallenen Körper (11) in Form eines offenen Rings, der ein erstes Ende (E1) hat, das mit einem Rückhalteelement (14) versehen ist,
- einen Finger (12), der um einen Bolzen (13) herum zwischen einer Verschluss- und einer Öffnungsposition beweglich ist, wobei sich der genannte Bolzen nahe dem zweiten Ende (E2) des Körpers (11) befindet,
- eine elastische Rückholvorrichtung (16) zum Zurückziehen des Fingers (16) in die Verschlussposition,
**dadurch gekennzeichnet, dass** der Finger (12) von einem starren Metalldraht mit einem Durchmesser gebildet wird, der kleiner ist als der des Körpers (11), welcher Metalldraht an einem der Enden eine Auskragung (15A) aufweist, um ein männliches Befestigungselement (15) zu bilden, sowie am entgegengesetzten Ende eine Anlenköse (17) zum Durchführen des Bolzens (13).

2. Karabiner nach Anspruch 1, **dadurch gekennzeichnet, dass** die Anlenköse (17) eine geschlossene Form hat, die durch Einrollen des Endes des Metalldrahts entsteht.

3. Karabiner nach Anspruch 2, **dadurch gekennzeichnet, dass** die Anlenköse (17) des Fingers (12) an den entgegengesetzten Seiten zwei Führungs-Abflachungen (29A, 29B) sowie eine Verdickung (30) in einem nicht abgeflachten Bereich umfasst, die als Blockierungselement dient, das mit einem Anschlagbereich des Körpers (11) zusammenwirkt.

4. Karabiner nach Anspruch 1, **dadurch gekennzeichnet, dass** die elastische Rückholvorrichtung (16) des Fingers (12) eine Kompressionsfeder (16A) umfasst, die mit einem Zwischen-Übergangsbügel (20) in einer Aufnahme (21) des zweiten Endes (E2) des Körpers (11) zusammenwirkt.

5. Karabiner nach Anspruch 4, **dadurch gekennzeichnet, dass** der Zwischen-Übergangsbügel (20) einen Zentrierstift (25) umfasst, der dazu bestimmt ist, in die Kompressionsfeder (16A) eingeführt zu werden, und zwei Übertragungsarme (26A, 26B), die in Kontakt mit der Anlenköse (17) stehen, um beim Öffnen des Fingers (12) eine Spannbewegung auf die Feder (16A) und beim Entspannen der Feder (16A) eine entgegengesetzte Bewegung des Schließens des Fingers (12) durch Drehen der Anlenköse (17) um den starren Bolzen (13) zu übertragen.

6. Karabiner nach Anspruch 1, **dadurch gekennzeichnet, dass** das zweite, untere Ende (E2) des Körpers (11) mit zwei einander gegenüberliegenden, geringfügig konvexen Flügeln (22A, 22B) versehen ist, die durch einen mittigen Zwischenraum (23) zum Aufnehmen der Anlenköse (17) des Fingers (12) voneinander getrennt sind, wobei die beiden Flügel (22A, 22B) mit zwei in Querrichtung auf die Öffnung (18) der Anlenköse (17) ausgerichteten Öffnungen (24) zur Durchführung des Bolzens (13) versehen sind.

7. Karabiner nach Anspruch 2, **dadurch gekennzeichnet, dass** der Körper (11) aus geschmiedeter Aluminiumlegierung hergestellt ist und am oberen Ende (E1) ein weibliches Rückhalteelement (14) umfasst, das mit einer Aussparung (14A) in einer Form versehen ist, die die Form des männlichen Befestigungselements (15) ergänzt, und dass der Draht des beweglichen Fingers (12) aus Stahl besteht und eine gerade oder gebogene Form hat.

8. Karabiner nach Anspruch 5, **dadurch gekennzeichnet, dass** die Übertragungsarme (26A, 26B) des Zwischen-Übergangsbügels (20) mit einem Paar Nocken (31) zusammenwirken, um die genannte Spann- und Schließbewegung zu übertragen.

9. Karabiner nach Anspruch 8, **dadurch gekennzeichnet, dass** das Paar Nocken (31) fest verbunden ist mit dem Finger (12), indem es in der Verlängerung der Verdickung (30) der Anlenköse (17) vorgesehen ist.

10. Karabiner nach Anspruch 8, **dadurch gekennzeichnet, dass** das Paar Nocken (31) von einem Halteelement (32) getragen wird, das ein erstes Ende (33) aufweist, das an die Verdickung (30) anliegt, und am zweiten, entgegengesetzten Ende einen röhrenförmigen Ansatz (34) aufweist, der koaxial in der ringförmigen Öffnung (18) der Anlenköse (17) angeordnet ist, um dem Bolzen (13) als Lager zu dienen.
